# EUROPEAN PATENT SPECIFICATION

(11) **EP 0 682 856 B1**
(45) Date of publication and mention of the grant of the patent: **25.07.2001**
(21) Application number: 95830199.6
(22) Date of filing: 15.05.1995
(51) Int. Cl.: A01B 63/114, A01D 34/86

(54) **A self-propelled machine with controlled-level implement**
Eigenangetriebene Maschine mit niveaukontrolliertem Gerät
Machine automotrice avec instrument à niveau contrôlé

(30) Priority: 16.05.1994 IT BO940220
(43) Date of publication of application: 22.11.1995
(73) Proprietor: Orsi, Stefano, 40050 Castello d'Argile (Bologna) (IT)
(72) Inventor: Orsi, Stefano, 40050 Castello d'Argile (Bologna) (IT)
(74) Representative: Martini, Lazzaro

(56) References cited:
- WO-A-92/11750
- DE-U- 9 400 992
- FR-A- 2 642 797
- GB-A- 1 033 184
- GB-A- 1 156 452
- GB-A- 2 129 265

## Description

The present invention concerns a self-propelled machine with controlled-level implement, and in particular a self-propelled machine capable of automatically controlling the horizontal and vertical level of the implement mounted by it on an articulated arm.

Machines of this kind have many different purposes, depending on the implement mounted and they consist basically of a tractor unit, a mounting arm and an implement.

The tractor unit comes in many different forms, depending on the type of ground it has to work on: thus, it may be a farm tractor, an earth-moving machine, a railway trolley, a lorry or similar machine; its essential feature is an engine, which converts energy into motion and drives the implement mounted, and it may be wheel-, track- or rail-mounted in order to enable the entire machine to move in at least one direction.

The implement is mounted on an arm forming part of the tractor unit itself or connectable to a power take-off on the tractor unit, and, depending on requirements, it may be any implement capable of doing agricultural, road or rail work on irregular ground.

In this description, we shall refer by way of example only to an implement known as a "chopper", that is to say, an apparatus equipped with cutters designed to chop or cut grass or other plants at a set distance from the ground, but the invention can equally be applied to any agricultural or road or railway maintenance machine having an implement which must not only be maintained substantially parallel to the ground it is working on, irrespective of the gradient of the ground itself, but also moved in a direction parallel to the direction in which the tractor unit is travelling.

In the case of a chopper, also called grass cutter, the implement consists of a plurality of blades distributed along one or more rotating shafts which are kept substantially parallel to the ground and which vary in length according to the working range of the machine, that is, the extent of the ground covered by the implement.

The implement, which in this case is the rotating shaft equipped with blades but which may be any of numerous other kinds of apparatus, must be kept at a constant height from the ground (usually very close), so that the ground is treated uniformly, leaving the vegetation at just the right height, but without allowing the blades to come into contact with the soil.

Moreover, in those cases where the implement works in a vertical position, that is to say, with the rotating shaft substantially perpendicular to the ground, the implement itself must be kept at a constant height from the ground so as to obtain a uniform cut on the vertical work surface.

In order to do the job properly, it is therefore very important to keep the implement at a constant height from the ground; when the machine is working on irregular ground, with humps and dips in it, the implement, in order to remain parallel to the ground, must be raised and lowered by operating the articulated mounting arm through a hydraulic drive circuit.

At present the job of keeping the implement parallel to the ground is done manually by the same person who drives the tractor unit. This means that the driver of the tractor unit must control the direction and/or the speed of the machine and, at the same time, estimate and, when necessary, vary the height of the implement from the ground (and its distance from obstacles) in accordance with differences in ground level and changed working conditions.

For this reason, self-propelled machines of this kind must be driven by highly skilled workers. Moreover, the risk of accidents is always high because the driver's attention must be divided between the many different aspects of the work.

Many attempts have been made to overcome some of said drawbacks. For example, the documents WO-92 11750-A, GB-A-2 129 265 and GB-A-1 156 452 disclose self-propelled machines in which a mounting arm is provided with levelling means for adjusting automatically the height of the relevant implement and its angle with respect to the ground. These machines, in order to adjust the height and the angle of the implement, detect the position of the implement using two sensors disposed along only one working edge. This feature not allow to adjust correctly the implement when the machine work on a working edge non uniform. In other terms, when the middle of the implement is in contact with a hump or another protrusion wich keeps the two ends of the implement suspended in mid air, the relevant sensors cannot issue signals that determine correctly the working configuration.

The aim of the present invention is to overcome all the disadvantages just mentioned, in particular the disadvantages regarding the irregularity of the ground, both in parallel and perpendicularly to the direction of the work, by providing a self-propelled machine with an automatic, controlled-level implement, that is, an implement that does not need to be levelled by the driver of the tractor unit.

The invention, as characterized in the claims below, solves the problem of automatically levelling the implement, both horizontally and vertically, by providing a self-propelled machine consisting of an implement, connected to a tractor unit through a mounting arm and equipped with sensors designed to level the implement by sensing the distance between the ground (or fixed obstacles in any position) and the implement itself and issuing control signals to the means which drive the mounting arm and the implement itself.

The present invention makes it possible to vary the height (or the distance) of the implement from the ground, as well as its angle, according to the work surface and to special working conditions.

The machine disclosed also makes it possible to estimate the irregularity of the ground, both in parallel and perpendicularly to the direction of work and to partially or totally switch off the automatic levelling means when it is not required.

The technical characteristics of the invention are laid out in the claims below and the advantages of the disclosure are apparent from the detailed description which follows, with reference to the accompanying drawings, which illustrate a preferred embodiment of the invention by way of example and in which:
- Figure 1 is a schematic front view of an embodiment of the invention in which the self-propelled machine is a grass or hedge chopper or cutter and in which some of the parts are not to scale in order to better illustrate details of the invention;
- Figure 2 shows a possible block diagram illustrating the connections between some of the components of an embodiment of the invention;
- Figure 3 is a schematic side view showing the configurations of an embodiment of the invention during successive stages of a working sequence;
- Figures 4, 5, 6, 7 and 8 are schematic front views of an embodiment of the invention in different working and positional configurations;
- Figures 9 and 10 are schematic front views of an embodiment of the invention in different working and positional configurations when it encounters fixed obstacles and when it is working in the vertical position.

With reference to the drawings listed above, a self-propelled machine (labelled 1 as a whole) with automatic, controlled-level implement is of the type including a tractor unit 2, a mounting arm 3 and an implement 4.

The tractor unit 2 may be any of numerous types of machine, with drive means and an engine to provide motion in at least one direction; in the drawings, it is a farm tractor which moves on wheels 21.

The mounting arm 3 may be an integral part of the tractor unit 2 or may be connected to a power take-off on the tractor unit.

The implement 4 is driven by the drive means of the tractor unit, that is to say, by an engine providing mechanical energy which may be suitably converted to drive the implement 4 and the mounting arm 3, which in the drawings, is an articulated arm and has a hydraulic circuit with at least three hydraulic cylinders 32, 33 and 34. The mounting arm 3 will not be described in detail in terms of its drive means and connection to the tractor 2 since it is of a known type.

The self-propelled machine 1 moves in a direction A that is substantially parallel to an area Z to be treated.

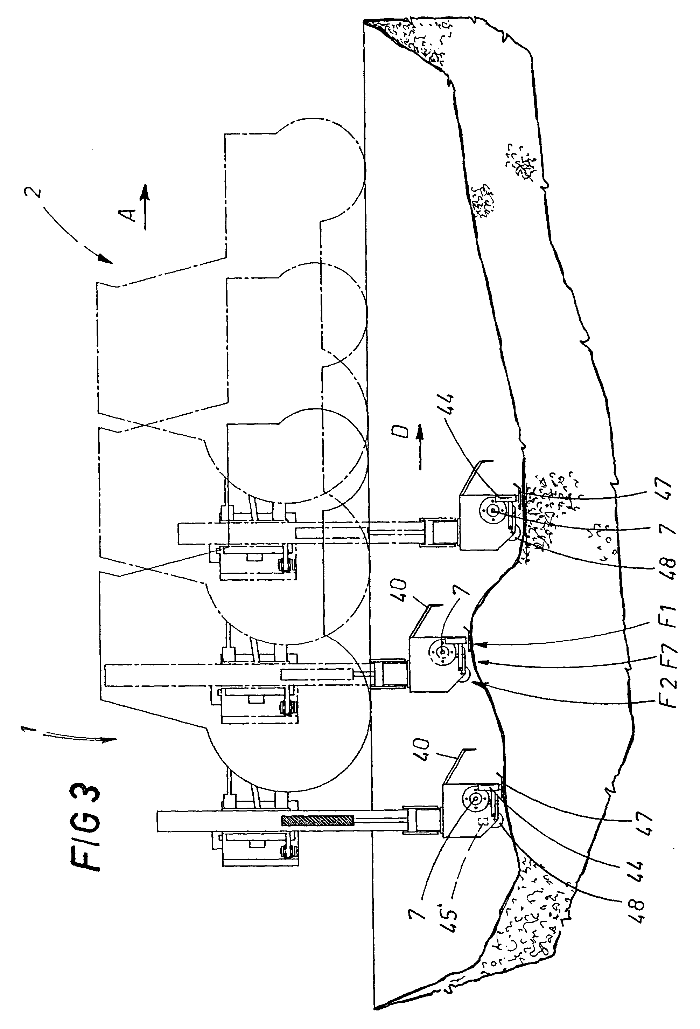

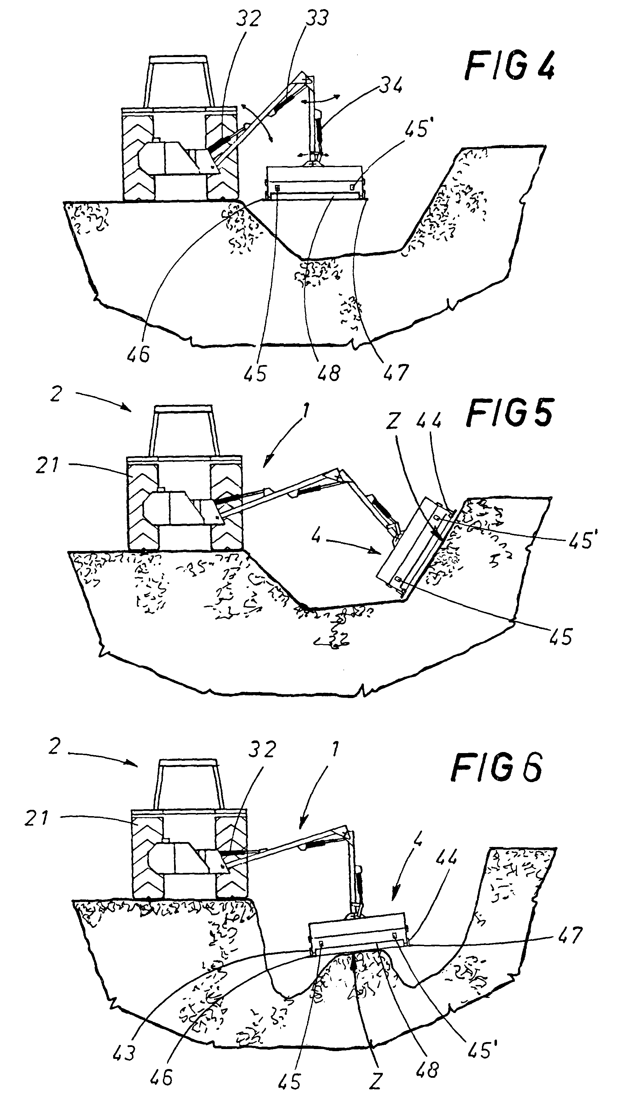

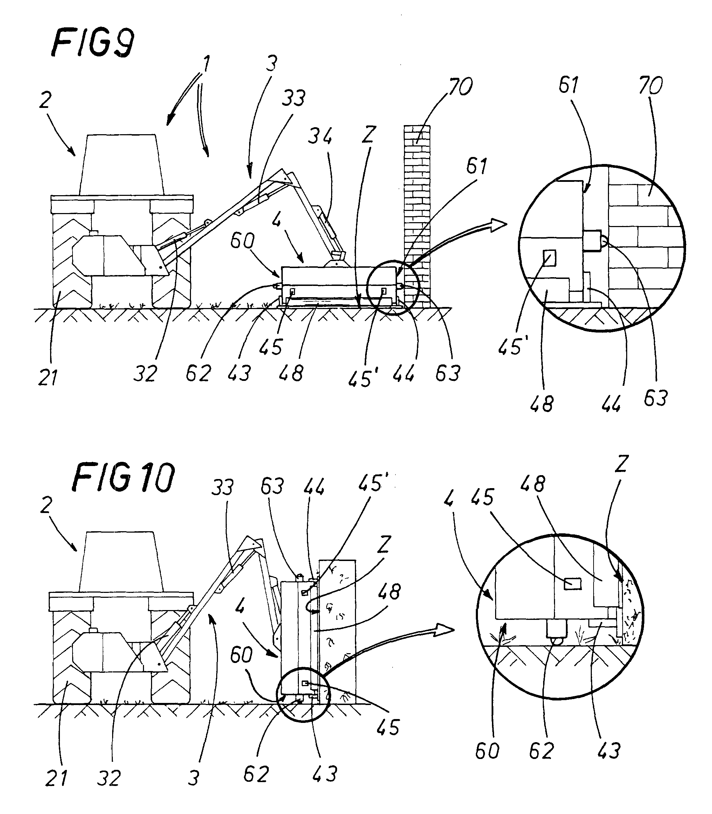

The area Z may lie in a substantially horizontal plane, as illustrated in Figs. 3, 7, 8 and 9, in a sloping plane, when the ground has humps and dips in it, as illustrated in Figs. 5 and 6, or in a substantially vertical plane as in the example illustrated in Fig. 10.

In practice, the machine 1 works in a direction D that is parallel to the direction of travel A of the tractor unit 2, on a strip of ground whose width corresponds to the working width L of the implement defined by its two ends or peripheral portions 41 and 42.

The cylinders 32, 33 and 34 define means for levelling the implement, namely, means 32 and 33 for adjusting the height of the implement 4 from the ground and means 34 for adjusting the angle of the implement in relation to the area to be treated.

Means for sensing the distance between the implement 4 and the ground, calculated by processing means 5, are envisaged on the levelling means (in practice, the hydraulic circuit which drives the cylinders) and operate automatically on the levelling means through solenoid valves EV, for example) in such a way as to allow the machine to follow the contours of the ground in the area to be treated.

The processing means 5 may consist, for example, of electronic devices with appropriate software which may reside entirely or partially on the machine itself or which may be loaded when necessary, in accordance with the work to be done. In practice, the processing means 5, receive the signals from the sensing means and drive the levelling means of the implement 4 without requiring the intervention of the driver of the tractor unit 2.

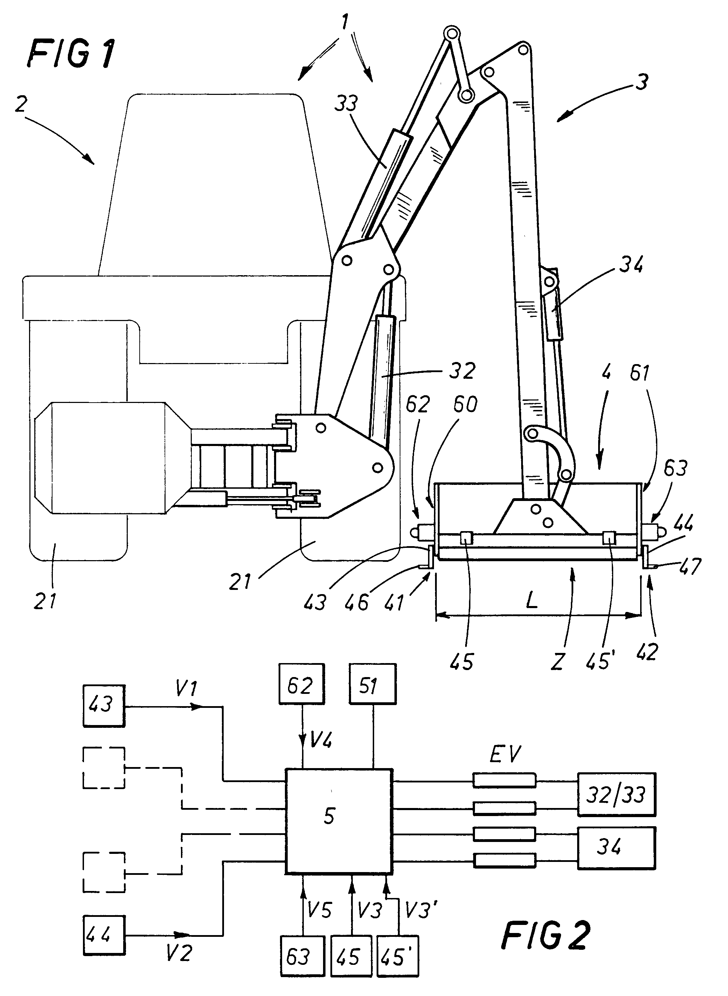

In the embodiment illustrated in Figure 1, the sensing means consist of four transducers 43, 44, 45 and 45' and two side transducers 62 and 63, described below.

The first transducer 43 and the second 44 are fitted at the ends 41 and 42 of the implement 4 and are designed to operate on the levelling means in such a way as to determine the distance between the ends 41 and 42 and the ground, or to issue a first signal V1 and a second signal V2, respectively, when the ends 41 and 42 come into contact with the ground in at least two parts of the same working edge F1.

The third transducer 45 and the fourth 45' are fitted to the implement 4 at a second working edge F2 that does not coincide with the first and that is designed to detect contact with the ground and to inhibit the levelling means when neither the first signal V1 nor the second V2 is present, that is, when the implement 4 is working on an irregular surface whose irregularity is substantially perpendicular to the direction of work D.

The implement 4, which in some drawings has a guard 40 at the front, is equipped with a roller 48 exending along its entire width L, connected to the third transducer 45 and the fourth transducer 45'so as to allow sensing along the entire length of the second working edge F2.

As shown more clearly in Fig. 3, where the numeral 7 indicates a rotating shaft 7 of a chopper and F7 the related working or cutting edge, the roller 48 is behind the rotating shaft in the direction of work D, whilst the first working edge F1, where the first and second transducers detect the ground, leads the shaft 7.

The leading position of the transducers 43 and 44 makes it possible to detect changes in ground level before the rotating shaft 7 comes into action, whilst roller 48 being behind the cutting edge F7 means that it does not flatten bushes and other plants and hence does not interfere with the cutting action.

The block diagram in Fig 2 shows a possible mode of connecting the various different parts of the machine 1; the transducers 43, 44, 45 and 45' and the side transducers 62 and 63 are shown as continuous lines, whilst other transducers which may be fitted are shown as broken lines.

The transducers (the first transducer 43 and the second 44 in the accompanying drawings being mounted on two guides or slides 46 and 47, located at the bottom of the implement 4 to define feeler units designed to sense contact between the implement 4 and the ground) may be any of numerous different kinds of devices, examples of which are listed below.

The transducers may be any devices capable of detecting:
- position, such as microswitches, sensors, feelers;
- proximity, such as encoders, optical detectors, photocells;
- force, such as load cells, force multipliers;
- pressure, such as hydraulic transducers, pressure switches, differential cylinders, fluid accumulators, hydraulic and pneumatic cylinders.

The connection between the transducers and the processing means 5 and between the processing means and the levelling means may be achieved by electric cables, radio signals, optic fibres, pipes, hoses and similar means.

Moreover, the transducers may be fitted not only at the ends of the implement 4, as in the embodiment illustrated, but distributed along the entire width L of the implement itself, so as to sense ground level more uniformly; these transducers are represented in Fig. 2 by the blocks without numbers.

The self-propelled machine 1 can work on both flat and sloping surfaces, as shown in the drawings.

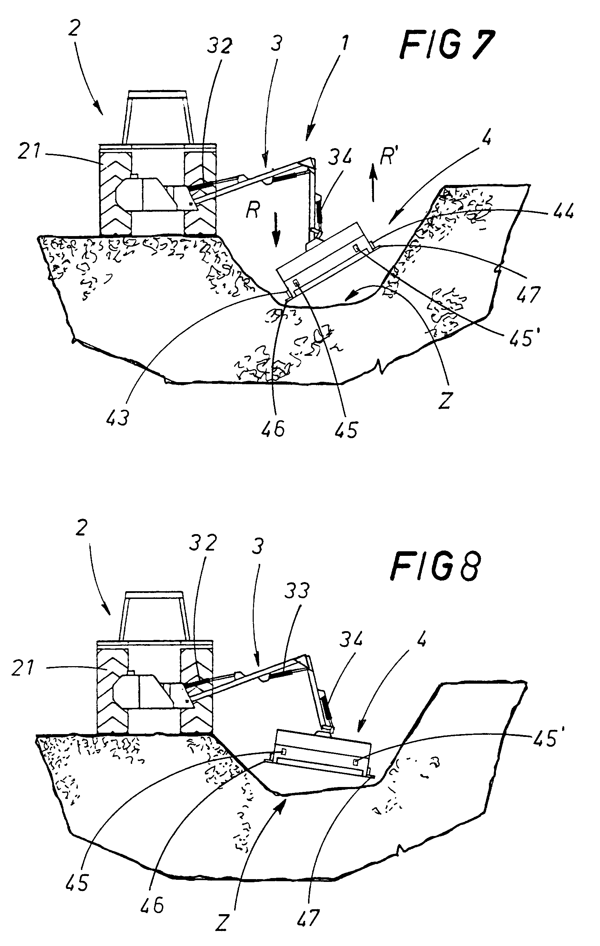

When the machine starts working, the mounting arm 3 moves the implement 4 down towards the ground. When, as shown in Figs. 7 and 8, the two transducers 43 and 44, or their mounting slides 46 and 47, touch the ground, either simultaneously or alternately, they issue signals V1 and V2 telling the processing means 5 that the implement has reached ground level. Depending on the signals received, the machine 1 lowers the implement 4 (by means of the cylinders 32 and 33) or angles it (by means of cylinder 34 in directions R and R').

When the ground has irregularities along the working edge (that is, when the implement 4 comes to rest on a hump running in a direction parallel to the direction of work D so that the two ends of the implement 41 and 42 cannot both touch the ground at once, as shown in Fig. 6), the transducers 43 and 44 cannot both issue a signal because the slides 46 and 47 do not touch the ground. In such cases, the third transducer 45 and the fourth transducer 45', mounted by roller 48, issue a third signal V3 and a fourth signal V3' to the processing means 5 in such a way as to sense ground level on another working edge and to place the implement in a stable position at an angle.

The roller 48 is attached at the centre so that it can pivot to the right or left side according to the features of the ground the second working edge F2 comes to rest on.

In other terms, when neither slide 46 nor slide 47 can touch the ground because the middle of the implement is in contact with a hump (or other protrusion which keeps the two ends of the implement 41 and 42 suspended in mid air and prevents the transducers 43 and 44 from sensing the ground) contact is made by the roller 48 because it extends along the entire width of the implement, creating one of the following situations. When only one of the transducers 45 or 45' operating on the roller 48 makes contact, a signal is issued only on that side and the processing means 5 accordingly angles the implement to follow the slope of the ground. If both transducers 45 and 45' touch the ground (while sensors 43 and 44 are still not sensing it, the processing means 5 receive signals from both ends of the roller and accordingly give the command to raise the implement 4 to prevent the cutting tool from being lowered too close to the ground.

In short, for effective control of implement level, at least two transducers fitted opposite one another are required. If the ground has no longitudinal irregularities in it, the front slides 46 and 47, connected to the first and second transducers 43 and 44, are sufficient to enable the rotating shaft 7 with the cutters mounted on it to follow the contours of the ground, in terms of both level and gradient. When, however, there are irregularities extending in the same direction as work, the transducers on the roller 48 come into action.

In some cases, the implement 4 must be kept at a fixed angle to the ground and only its height from the ground varied. When this is the case, control means 51 may be envisaged (in Fig. 2, such control means are connected to the processing means 5), to be operated manually and acting on the connection between transducers 43 and 44 and the levelling means 32, 33 and 34. The control means 51, which can be operated from the driver's seat in the tractor unit 2, can be used to switch off at least one of the transducers and the angle adjustment means 34 when working on a surface that is not parallel to the ground, leaving at least one other transducer and the height adjustment means 32 and 33 to control the implement 4.

As mentioned earlier, the sensing means may also include a pair of side transucers 62 and 63 fitted to the outside faces 60 and 61 of the implement 4. To facilitate their identification in the accompanying drawings, these transducers have not been drawn to scale.

In practice, the side transducers 62 and 63 are mounted on the outside faces of the implement 4, substantially outside the limits defining the width L of the implement 4 itself.

The side transducers 62 and 63 send signals V4 and V5 to the processing means 5 to vary the distance of the implement 4 from the ground or from fixed obstacles by operating on the hydraulic control circuit of the mounting arm 3.

In Fig. 9, where the implement 4 is working near a wall 70, one of the side transducers, namely the one on the right, indicated by the numeral 63, issues a signal V5 when it comes into contact with the wall; the other side transducer, that is, the one on the left, indicated by the numeral 62, issues a signal V4, or does not issue any signal, to indicate that there are no obstacles on that side of the implement. Thus, the control means 5 receive one or two signals which enable the machine to follow the profile of the obstacle (in this case, the wall), while also following the profile of the ground, thanks to transducers 43, 44, 45 and 45', described above.

In Fig. 10, the implement 4 is set vertically to work on a vertical surface Z; in this case, the signals issued by the side transducers 62 and 63 to the processing means 5 can be used, for example, to keep the side of the implement 4 corresponding in this case to its bottom end in contact with the ground.

The invention described can be subject to modifications and variations without thereby departing from the scope of the inventive concept. Moreover, all the details of the invention may be substituted by technically equivalent elements.

## Claims

1. A self-propelled machine with automatic, controlled-level implement of the type including a tractor unit (2), with an engine and drive means, a mounting arm (3) connected to the said tractor unit(2) and an implement (4), driven by the said drive means and connected to the tractor unit (2) through the mounting arm (3); the said self-propelled machine (1) being driven in a direction of travel (A) which is substantially parallel to a direction of work (D), or to an area (Z) to be treated whose width (L) corresponds to the width (L) of the said implement (4) between its two ends or peripheral portions (41, 42); there being envisaged means for levelling the said implement consisting of means (32,33) for adjusting the height of the implement (4) from the ground and means (34) for adjusting the angle of the implement with respect to the area (Z); the said machine being equipped with means for sensing the distance between the said implement (4) and the ground, connected through processing means (5), to the aforesaid levelling means (32, 33, 34) and operating automatically on the levelling means in such a way as to allow the machine (1) to follow the contours of the ground in the area (Z) to be treated; the said sensing means consisting of at least two transducers fitted to the said implement (4) at two ends (41,42) or at any two points on either side of the implement and designed to determine the distance between the said ends (41,42) and the ground or the differences in level between two parts, on the same working edge, of the said area to be treated; the said self-propelled machine being **characterized in that** the said sensing means consist of at least a first transducer (43) and a second transducer (44) fitted to the said ends (41,42) of said implement (4) and designed to operate on the levelling means (32, 33, 34) in such a way as to determine the distance between the said ends (41, 42) and the ground or to issue a first signal (V1) and a second signal (V2), respectively, when the ends (41, 42) come into contact with the ground in at least two parts of the same working edge (F1), and of a third transducer (45) and a fourth transducer (45') fitted at either side of the implement (4) defining a second working edge (F2), which does not coincide with the first working edge (F1) and wich is designed to sense contact with the ground and to control the levelling means (32, 33, 34) when neither the first signal (V1) nor the second (V2) is present or when the implement (4) is working on an irregular surface whose irregularity is substantially perpendicular to the direction of work (D).

2. The self-propelled machine with controlled-level implement according to claim 1, where the aforesaid implement presents a rotating shaft (7) mounting the cutting or working tool, characterized in that the said third transducer (45) and fourth transducer (45') are mounted on a roller (48), fitted to the implement (4) and extending along the entire width (L) of the implement (4) and in that, when moving in the direction of work (D), the said first working edge (F1) leads the working edge (F7) of the rotating shaft (7) which in turn leads the roller (48), defining the said second working edge (F2) .

3. The self-propelled machine with controlled-level implement according to claim 1 characterized in that the said sensing means also include a pair of side transducers (62, 63) mounted on the outside faces (60, 61) of the implement (4), outside the limits defining the width (L) of the implement (4) itself and designed to operate on the said levelling means (32, 33, 34) in such a way as to automatically vary the distance of the said outside faces (60, 61) from parts of the ground or fixed obstacles on the side of the implement (4).

4. The self-propelled machine with controlled-level implement according to claim 1 characterized in that it comprises control means (51), operated manually and acting on the connection between the aforesaid pair of transducers (43, 44; 45, 45') and the levelling means (32, 33, 34), and designed to switch off at least one of the said transducers and the angle adjustment means (34) when working on a surface that is not parallel to the ground, so as to leave at least one other transducer and the height adjustment means (32, 33) to control the implement (4).

5. The self-propelled machine with controlled-level implement according to claim 1 characterized in that the said implement (4) is equipped, at its aforesaid ends (41,42), with at least two guides or slides (46, 47) mounting the said transducers (43, 44) and located at the bottom of the implement (4) to define feeler units designed to sense contact between the implement (4) and the ground.

6. The self-propelled machine with controlled-level implement according to claim 1 characterized in that the said implement (4) is equipped with a roller (48) extending along the entire width (L) of the implement itself and connected to the said third transducer (45) and fourth transducer (45') in such a way as to allow sensing along the entire second working edge (F2).

7. The self-propelled machine with controlled-level implement according to claim 1, where the said mounting arm (3) and the said implement are driven by a hydraulic circuit, characterized in that the said hydraulic circuit is connected to and controlled by the said processing means (5) through solenoid valves (EV).

8. The self-propelled machine with controlled-level implement according to claim 1 characterized in that the said transducers are distributed along the entire width (L) of the said implement (4) so as to enable the distance between the said implement (4) and the ground, or the contact between the said implement (4) and the ground to be sensed uniformly along the entire width of the implement.

## Patentansprüche

1. Selbstfahrende Maschine mit einem automatischen, höhengesteuerten Arbeitsgerät, wobei die Maschine eine Schleppereinheit (2) mit einem Motor und Antriebseinrichtungen sowie einen Montagearm (3), der mit der Schleppereinheit (2) verbunden ist, und ein Arbeitsgerät (4) umfaßt, das von den Antriebseinrichtungen angetrieben und über den Montagearm (3) mit der Schleppereinheit (2) verbunden ist, wobei die selbstfahrende Maschine (1) in einer Fahrtrichtung (A) angetrieben wird, die im wesentlichen parallel zu einer Arbeitsrichtung (D) oder zu einem zu bearbeitenden Flächenbereich (Z) verläuft, dessen Breite (L) der Breite (L) des Arbeitsgerätes (4) zwischen seinen beiden Enden oder Randabschnitten (41, 42) entspricht, wobei Höheneinstelleinrichtungen für das Arbeitsgerät vorgesehen sind, die aus Einrichtungen (32, 33) zum Einstellen der Höhe des Arbeitsgerätes (4) bezüglich des Bodens und Einrichtungen (34) zum Einstellen des Winkels des Arbeitsgerätes bezüglich des Flächenbereiches (Z) bestehen, wobei die Maschine mit Mitteln zum Erfassen des Abstandes zwischen dem Arbeitsgerät (4) und dem Boden ausgerüstet ist, die über Verarbeitungsmittel (5) mit den erwähnten Höheneinstelleinrichtungen (32, 33, 34) verbunden sind und automatisch auf die Höheneinstelleinrichtungen in der Weise einwirken, daß sie es der Maschine (1) ermöglichen, der Kontur des Bodens in dem zu bearbeitenden Flächenbereich (Z) zu folgen, wobei die Erfassungseinrichtungen aus wenigstens zwei Meßübertragern bestehen, die an dem Arbeitsgerät (4) an den beiden Enden (41, 42) oder an irgend zwei beliebigen Punkten auf beiden Seiten des Arbeitsgerätes befestigt und so konstruiert sind, daß sie den Abstand zwischen den betreffenden Enden (41, 42) und dem Boden oder die Höhendifferenzen zwischen zwei Teilen an der gleichen Arbeitskante des zu bearbeitenden Flächenbereiches bestimmen, wobei diese selbstfahrende Maschine dadurch gekennzeichnet ist, daß die Erfassungseinrichtungen aus wenigstens einem ersten Meßübertrager (43) und einem zweiten Meßübertrager (44) bestehen, die an den besagten Enden (41, 42) des Arbeitsgerätes (4) befestigt und so aufgebaut sind, daß sie auf die Höheneinstelleinrichtungen (32, 33, 34) in der Weise einwirken, daß sie den Abstand zwischen den Enden (41, 42) und dem Boden ermitteln oder ein erstes Signal (V1) und ein zweites Signal (V2) abgeben, wenn die Enden (41, 42) mit dem Boden an wenigstens zwei Teilen der gleichen Arbeitskante (F1) in Berührung kommen, und einen dritten Meßübertrager (45) und einen vierten Meßübertrager (45'), die auf den beiden Seiten des Arbeitsgerätes (4) montiert sind und eine zweite Arbeitskante (F2) definieren, die nicht mit der ersten Arbeitskante (F1) zusammenfällt, und die so aufgebaut sind, daß sie eine Berührung mit dem Boden erfassen, und die Höheneinstelleinrichtungen (32, 33, 34) steuern, wenn weder das erste Signal (V1) noch das zweite Signal (V2) vorhanden ist oder wenn das Arbeitsgerät (4) auf einer unregelmäßigen Oberfläche arbeitet, deren Unregelmäßigkeit im wesentlichen senkrecht zur Arbeitsrichtung (D) verläuft.

2. Selbstfahrende Maschine mit einem höhengesteuerten Arbeitsgerät nach Anspruch 1, bei der das Arbeitsgerät eine rotierende Welle (7) aufweist, an der ein Schneid- oder Arbeitswerkzeug montiert ist, dadurch gekennzeichnet, daß der dritte Meßübertrager (45) und der vierte Meßübertrager (45') auf einer Walze (48) montiert sind, die am Arbeitsgerät (4) befestigt ist und sich längs der gesamten Breite (L) des Arbeitsgerätes (4) erstreckt, und daß bei einer Bewegung in der Arbeitsrichtung (D) die erste Arbeitskante (F1) der Arbeitskante (F7) der rotierenden Welle (7) voraus läuft, die ihrerseits der Walze (48) voraus läuft, welche die zweite Arbeitskante (F2) definiert.

3. Selbstfahrende Maschine mit einem höhengesteuerten Arbeitsgerät nach Anspruch 1, dadurch gekennzeichnet, daß die Erfassungseinrichtungen auch ein Paar von Seiten-Meßübertragern (62, 63) umfassen, die auf den äußeren Flächen (60, 61) des Arbeitsgerätes (4) außerhalb der Grenzen montiert sind, welche die Breite (L) des Arbeitsgerätes (4) selbst definieren und daß diese Meßübertrager so aufgebaut sind, daß sie auf die Höheneinstelleinrichtungen (32, 33, 34) derart einwirken, daß sie automatisch den Abstand der Außenflächen (60, 61) von Teilen des Bodens oder festen Hindernissen auf der Seite des Arbeitsgerätes (4) verändern.

4. Selbstfahrende Maschine mit einem höhengesteuerten Arbeitsgerät nach Anspruch 1, dadurch gekennzeichnet, daß sie Steuereinrichtungen (51) umfaßt, die von Hand betätigt werden und auf die Verbindung zwischen dem zuvor erwähnten Meßübertrager-Paar (43, 44; 45, 45') und der Höheneinstelleinrichtung (32, 33, 34) einwirken und so aufgebaut sind, daß sie wenigstens einen dieser Übertrager und die Winkel-Einstelleinrichtung (34) abschalten, wenn auf einer Oberfläche gearbeitet wird, die nicht parallel zum Boden verläuft, um so wenigstens einem anderen Meßübertrager und der Höheneinstelleinrichtung (32, 33) die Steuerung des Arbeitsgerätes (4) zu überlassen.

5. Selbstfahrende Maschine mit einem höhengesteuerten Arbeitsgerät nach Anspruch 1, dadurch gekennzeichnet, daß das Arbeitsgerät (4) an seinen oben erwähnten Enden (41, 42) mit wenigstens zwei Führungen oder Schlitten (46, 47) ausgerüstet ist, welche die Meßübertrager (43, 44) tragen und am Boden des Arbeitsgerätes (4) angeordnet sind, um Fühlereinheiten zu definieren, die aufgebaut sind, um eine Berührung zwischen dem Arbeitsgerät (4) und dem Boden zu erfassen.

6. Selbstfahrende Maschine mit einem höhengesteuerten Arbeitsgerät nach Anspruch 1, dadurch gekennzeichnet, daß das Arbeitsgerät (4) mit einer Walze (48) ausgestattet ist, die sich längs der gesamten Breite (L) des Arbeitsgerätes selbst erstreckt und mit dem dritten Meßübertrager (45) und dem vierten Meßübertrager (45') so verbunden ist, daß eine messende Erfassung längs der gesamten zweiten Arbeitskante (F2) ermöglicht wird.

7. Selbstfahrende Maschine mit einem höhengesteuerten Arbeitsgerät nach Anspruch 1, bei der der Montagearm (3) und das Arbeitsgerät von einer hydraulischen Einrichtung angetrieben werden, dadurch gekennzeichnet, daß die hydraulische Einrichtung mit der Verarbeitungseinrichtung (5) über Magnetventile (EV) verbunden ist und vermittels dieser gesteuert wird.

8. Selbstfahrende Maschine mit einem höhengesteuerten Arbeitsgerät nach Anspruch 1, dadurch gekennzeichnet, daß die Übertrager längs der gesamten Breite (L) des Arbeitsgerätes (4) so angeordnet sind, daß der Abstand zwischen dem Arbeitsgerät (4) und dem Boden oder eine Berührung zwischen dem Arbeitsgerät (4) und dem Boden längs der gesamten Breite des Arbeitsgerätes gleichförmig messend erfaßt werden kann.

## Revendications

1. Machine autopropulsée comportant un outil automatique à niveau commandé du type comprenant une unité formant tracteur (2) comportant un moteur et des moyens d'entraînement, un bras de montage (3) raccordé à ladite unité formant tracteur (2) et un outil (4), entraîné par lesdits moyens d'entraînement et raccordé à l'unité formant tracteur (2) par l'intermédiaire du bras de montage (3); ladite machine autopropulsée (1) étant entraînée dans une direction de déplacement (A) qui est essentiellement parallèle à une direction de travail (D), ou jusqu'à une zone (Z) devant être traitée, dont la largeur (L) correspond à la largeur (L) dudit outil (4) entre ses deux extrémités ou parties périphériques (41, 42); des moyens étant prévus pour la mise à niveau dudit outil, qui sont constitués par des moyens (32, 33) pour régler la hauteur de l'outil (4) au-dessus du sol et par des moyens (34) pour régler l'angle de l'outil par rapport à la zone (Z); ladite machine étant équipée de moyens pour détecter la distance entre ledit outil (4) et le sol, raccordés par des moyens de traitement (5) auxdits moyens de mise à niveau (32, 33, 34) mentionnés précédemment et agissant de façon automatique sur les moyens de mise à niveau de manière à permettre à la machine (1) de suivre les contours du sol dans la zone (Z) devant être traitée; lesdits moyens de détection étant constitués par au moins deux transducteurs montés sur ledit outil (4) à deux extrémités (41, 42) ou en deux points quelconquès de part et d'autre de l'outil et conçus pour déterminer la distance entre lesdites extrémités (41, 42) et le sol ou les différences de niveau entre deux parties, sur le même bord de travail, de ladite zone à traiter; ladite machine autopropulsée étant caractérisée en ce que lesdits moyens de détection sont constitués par au moins un premier transducteur (43) et un second transducteur (44) montés sur lesdites extrémités (41, 42) dudit outil (4) et conçus de manière à agir sur les moyens de mise à niveau (32, 33, 34) de manière à déterminer la distance entre lesdites extrémités (41, 42) et le sol ou délivrer respectivement un premier signal (V1) et un second signal (V2), lorsque les extrémités (41, 42) viennent en contact avec le sol dans au moins deux parties du même bord de travail (F1), et par un troisième transducteur (45) et un quatrième transducteur (45') montés de chaque côté dudit outil (4) en définissant un second bord de travail (F2) qui ne coïncide pas avec le premier bord de travail (F1) et qui est conçu de manière à détecter un contact avec le sol et commander les moyens de mise à niveau (32, 33, 34), lorsque ni le premier signal (V1) ni le second signal (V2) ne sont' présents ou lorsque l'outil (4) agit sur une surface irrégulière, dont l'irrégularité est essentiellement perpendiculaire à la direction de travail (D).

2. Machine autopropulsée comportant un outil à niveau commandé selon la revendication 1, dans laquelle l'outil mentionné précédemment présente un arbre rotatif (7) portant l'outil de coupe ou de travail, caractérisé en ce que ledit troisième transducteur (45) et ledit quatrième transducteur (45') sont montés sur un rouleau (48), monté sur l'outil (4) et s'étendant sur toute la longueur (L) de l'outil (4) et en ce que, lors du déplacement dans la direction de travail (D), ledit premier bord de travail (F1) guide le bord de travail (F7) de l'arbre rotatif (7) qui à son tour guide le rouleau (48) en définissant ledit second bord de travail (F2).

3. Machine autopropulsée comportant un outil à niveau commandé selon-la revendication 1, caractérisée en ce que lesdits moyens de détection incluent également une paire de transducteurs latéraux (62, 63) montés sur les faces extérieures (60, 61) de l'outil (4) à l'extérieur des limites définissant la largeur (L) de l'outil (4) lui-même et conçus pour agir sur lesdits moyens de mise à niveau (32, 33, 34) de manière à modifier automatiquement la distance entre lesdites faces extérieures (60, 61) et des parties du sol ou d'obstacles fixes du côté de l'outil (4).

4. Machine autopropulsée comportant un outil à niveau commandé selon la revendication 1, caractérisée en ce qu'elle comprend des moyens de commande (51) actionnés manuellement et agissant sur la liaison entre la paire mentionnée précédemment de transducteurs (43, 44; 45, 45') et les moyens de mise à niveau (32, 33, 34) et conçus de manière à débrancher au moins l'un desdits transducteurs et les moyens (34) de réglage d'angle lors du travail sur une surface qui n'est pas parallèle au sol, de manière à laisser au moins un autre transducteur et les moyens (32, 33) de réglage en hauteur commander l'outil (4).

5. Machine autopropulsée comportant un outil à niveau commandé selon la revendication 1, caractérisée en ce que ledit outil (4) est équipé, au niveau desdites extrémités (41, 42) mentionnées précédemment, d'au moins deux guides ou glissières (46, 47) supportant lesdits transducteurs (43, 44) et situées à la partie inférieure de l'outil (4) pour définir des unités de détection conçues pour détecter un contact entre l'outil (4) et le sol.

6. Machine autopropulsée comportant un outil à niveau commandé selon la revendication 1, caractérisée en ce que ledit outil (4) est équipé d'un rouleau (48) qui s'étend sur toute la largeur (L) de l'outil lui-même et est raccordé audit troisième transducteur (45) et audit quatrième transducteur (45') de manière à permettre une détection sur l'ensemble du second bord de travail (F2).

7. Machine autopropulsée comportant un outil à niveau commandé selon la revendication 1, dans laquelle ledit bras de montage (3) et ledit outil sont entraînés par un circuit hydraulique, caractérisée en ce que ledit circuit hydraulique est raccordé auxdits moyens de travail (5) et est commandé par ces derniers à l'aide de vannes électromagnétiques (EV).

8. Machine autopropulsée à comportant un outil à niveau commandé selon la revendication 1, caractérisée en ce que lesdits transducteurs sont répartis sur toute la largeur (L) dudit outil (4) de manière à permettre une détection uniforme de la distance entre ledit outil (4) et le sol ou du contact entre ledit outil (4) et le sol, sur toute la largeur de l'outil.
